(19) Europäisches Patentamt
European Patent Office
Office européen des brevets

(11) **EP 4 181 157 A1**

(12) **EUROPEAN PATENT APPLICATION**

(43) Date of publication:
**17.05.2023  Bulletin 2023/20**

(21) Application number: **21207927.1**

(22) Date of filing: **12.11.2021**

(51) International Patent Classification (IPC):
**H01B 1/02** *(2006.01)*      **H01B 9/00** *(2006.01)*
**B82Y 30/00** *(2011.01)*      **H01B 1/04** *(2006.01)*

(52) Cooperative Patent Classification (CPC):
**H01B 1/026; H01B 1/04; B82Y 30/00**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Vlatchain**
**Seoul 05594 (KR)**

(72) Inventor: **SEO, Sang Hyun**
**05594 SEOUL (KR)**

(74) Representative: **Cabinet Nony**
**11 rue Saint-Georges**
**75009 Paris (FR)**

(54) **WIRE AND STRANDED WIRE FOR HIGH-POWER ELECTRIC VEHICLE CHARGING CABLE,
AND HIGH-POWER ELECTRIC VEHICLE CHARGING CABLE**

(57)     The present disclosure relates to a wire and a stranded wire for a high-power electric vehicle charging cable which is capable of transmitting high power of more than 400 kWh, and the high-power electric vehicle charging cable. Specifically, the present disclosure relates to a wire for a high-power electric vehicle charging cable, a stranded wire for a high-power electric vehicle charging cable, and a high-power electric vehicle charging cable, which are obtained by coating a metal wire with a two-dimensional material layer having high electrical conductivity, in order to prevent an increase in weight of the electric vehicle charging cable. In addition, the wire, stranded wire or high-power electric vehicle charging cable according to the present disclosure is compatible with a conventional electric vehicle charging cable connector even when it is used to transmit high power of more than 400 kWh.

EP 4 181 157 A1

**Description**

**BACKGROUND**

1. Technical Field

The present disclosure relates to a wire and a stranded wire for a high-power electric vehicle charging cable which is capable of transmitting high power of more than 400 kWh, and the high-power electric vehicle charging cable. Specifically, the present disclosure relates to a wire for a high-power electric vehicle charging cable, a stranded wire for a high-power electric vehicle charging cable, and a high-power electric vehicle charging cable, which are obtained by coating a metal wire with a two-dimensional material layer, which has high electrical conductivity and is selected from the group consisting of graphene, MXene, stanene, boron nitride, niobium diselenide, disulfide, tantalum (IV) sulfide, and magnesium diboride, in order to prevent an increase in weight of the electric vehicle charging cable.

2. Related Art

In recent years, as environmental problems have become an issue, environmentally friendly vehicles with energy saving and environmental protection features have received a great deal of attention. In particular, hydrogen fuel cell vehicles, biodiesel vehicles, and electric vehicles have attracted attention as substitutes for automobiles including existing internal combustion engines. Among them, the electric vehicle refers to a vehicle that moves using electricity and uses electric energy stored in a battery as an energy source.

In particular, with the spread of electric vehicles, installation of electric vehicle chargers has increased. In addition, a quick charger capable of fast charging to enable charging within a short period of time has been spread. Unlike slow charging, the output voltage of the quick charger for fast charging is in the range of DC 50 V to 450 V, the output current thereof reaches 110 A, and the time required to charge the electric vehicle through the quick charger is only about 20 to 30 minutes. The output current of the quick charger is expected to increase depending on the battery capacity of the electric vehicle and charging technology.

Although the development of electric vehicle chargers has been actively made in line with the rapidly growing electric vehicle market in modern society, there are still many problems to be solved.

Since the quick charger has an output current of 100 A or higher, the heating of an electric vehicle charging cable that delivers the output current to the electric vehicle may become a problem. In particular, a method of increasing the diameter of the conductor of the electric vehicle charging cable may be used in order to transmit high power of more than 400 kWh, but this method has problems in that it is difficult to sufficiently reduce heat generation in the electric vehicle charging cable and the weight of the electric vehicle charging cable is increased. Thus, this electric vehicle charging cable is hardly compatible with an electric vehicle charging cable connector.

**SUMMARY**

The present disclosure has been made in order to solve the above-described problems with the conventional electric vehicle charging cable, and it is an object of the present disclosure to provide a wire for a high-power electric vehicle charging cable, a stranded wire for a high-power electric vehicle charging cable, and a high-power electric vehicle charging cable, which are obtained by coating a metal wire with a two-dimensional material layer which has high electrical conductivity and is selected from the group consisting of graphene, MXene, stanene, boron nitride, niobium diselenide, disulfide, tantalum (IV) sulfide, and magnesium diboride, , in order to transmit high power of more than 400 kWh through the electric vehicle charging cable and prevent an increase in weight of the electric vehicle charging cable.

The present disclosure provides a wire for a high-power electric vehicle charging cable including: a first wire formed of a metal; an alloy layer containing copper (Cu) and silver (Ag); and a two-dimensional material layer formed on the alloy layer by coating, wherein silver (Ag) is contained in an amount of 0.001 to 0.1 mass% based on 1 mass% of the alloy layer, and the cable transmits power of 400 kWh or more.

In the wire for a high-power electric vehicle charging cable, the two-dimensional material layer is selected from the group consisting of graphene, MXene, stanene, boron nitride, niobium diselenide, disulfide, tantalum (IV) sulfide, and magnesium diboride.

In the wire for a high-power electric vehicle charging cable, the two-dimensional material layer has a sheet resistance value of 400 $\Omega$/sq or lower.

In the wire for a high-power electric vehicle charging cable, the two-dimensional material layer is superconducting or near-superconducting.

In the wire for a high-power electric vehicle charging cable, the wire satisfies the following equation A:

[Equation A]

$$10 \leq H1/H2 \leq 1,000, \text{ wherein H1 is the radius of the first}$$

wherein H1 is the radius of the first wire, and H2 is the thickness of the alloy layer.

In the wire for a high-power electric vehicle charging cable, the first wire includes copper (Cu), the copper grains of the first wire are different from those of the alloy layer, and the copper grains of the alloy layer are larger than the copper grains of the first wire.

In the wire for a high-power electric vehicle charging cable, the wire has a radius of 0.1 to 50 mm.

The present disclosure also provides a stranded wire for a high-power electric vehicle charging cable including: a wire for a high-power electric vehicle charging cable; and a second wire formed of a metal, wherein the wire is one or more in number, the second wire is one or more in number, and the total volume of the wire is 10% or more based on the total volume of the stranded wire.

The present disclosure also provides a high-power electric vehicle charging cable including: a pair of power units including a wire for a high-power electric vehicle charging cable or a stranded wire for a high-power electric vehicle charging cable; at least one communication unit; a grounding unit; and an external jacket configured to surround the power units, the communication unit and the grounding unit.

The wire for a high-power electric vehicle charging cable, the stranded wire for a high-power electric vehicle charging cable, and the high-power electric vehicle charging cable according to the present disclosure are obtained by coating a metal wire with a two-dimensional material layer which has high electrical conductivity and is selected from the group consisting of graphene, MXene, stanene, boron nitride, niobium diselenide, disulfide, tantalum (IV) sulfide, and magnesium diboride, in order to transmit high power of more than 400 kWh through the high-power electric vehicle charging cable and prevent an increase in weight of the high-power electric vehicle charging cable.

In addition, the wire for a high-power electric vehicle charging cable, the stranded wire for a high-power electric vehicle charging cable, or the high-power electric vehicle charging cable according to the present disclosure is compatible with an existing electric vehicle charging cable connector even when it is used to transmit high power of more than 400 kWh.

**BRIEF DESCRIPTION OF THE DRAWINGS**

FIG. 1 is a perspective view of a wire for a high-power electric vehicle charging cable according to an example of the present disclosure.
FIG. 2 is a sectional view of the wire for a high-power electric vehicle charging cable according to an example of the present disclosure.
FIG. 3 is a schematic view of a stranded wire for a high-power electric vehicle charging cable according to an example of the present disclosure.
FIG. 4 shows a high-power electric vehicle charging cable according to an example of the present disclosure.

**DETAILED DESCRIPTION**

Hereinafter, a wire 100 for a high-power electric vehicle charging cable, a stranded wire 200 for a high-power electric vehicle charging cable, and a high-power electric vehicle charging cable 300 according to the present disclosure will be described in more detail with reference to the accompanying drawings.

Before the wire 100 for a high-power electric vehicle charging cable, the stranded wire 200 for a high-power electric vehicle charging cable, and the high-power electric vehicle charging cable 300 according to the present disclosure are described in more detail, aspects or embodiments of the present disclosure will be described in detail because the present disclosure may be modified in various ways and may have various forms. However, this is not intended to limit the present disclosure to specific embodiments, and it should be understood that the present disclosure includes all modifications, equivalents or replacements included in the spirit and scope of the present disclosure.

In each of the drawings, like reference numerals, particularly the reference numerals that have the same tens and units digits, or the same tens and units digits and alphabets, refer to the members having same or similar functions, and unless explicitly stated otherwise, members referred to by each reference numeral in the drawings may be regarded as a member conforming to these criteria.

In addition, in the drawings, the components are expressed in size or thickness as exaggeratedly large (or thick) or small (or thin) or expressed in simplified form in consideration of the convenience of understanding and the like, but the scope of protection of the present disclosure should not be construed as being limited thereby.

The terms used herein are for the purpose of describing particular aspects or embodiments only and are not intended to limit the present disclosure. Singular expressions include plural expressions unless the context clearly indicates otherwise.

In the present specification, it should be understood that terms such as "include", "comprise" and "consist of" are intended to denote the existence of mentioned characteristics, numbers, steps, operations, components, parts, or combinations thereof, but do not exclude the probability of existence or addition of one or more other characteristics, numbers, steps, operations, components, parts, or combinations thereof.

Unless otherwise defined, all terms used herein, including technical and scientific terms, have the same meaning as commonly understood by one of ordinary skill in the art to which the present disclosure pertains. Terms such as those defined in generally used dictionaries should be interpreted as having meanings identical to those specified in the context of related technology. Unless definitely defined in the present application, the terms should not be interpreted as having ideal or excessively formative meanings.

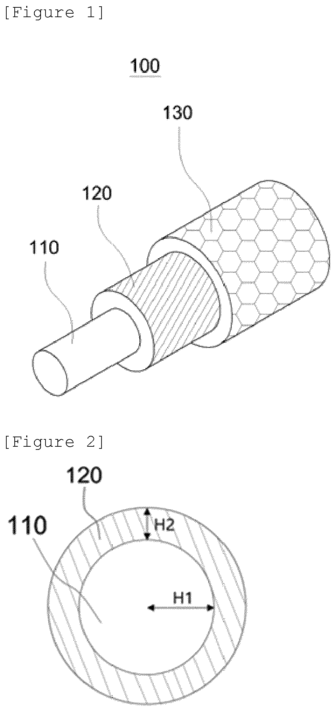

FIGS. 1 and 2 are views illustrating a wire 100 for a high-power electric vehicle charging cable according to an example of the present disclosure.

An example of the present disclosure may provide the wire 100 for a high-power electric vehicle charging cable including: a first wire 110 formed of a metal; an alloy layer 120 containing copper (Cu) and silver (Ag); and a two-dimensional material layer 130 formed on the alloy layer 120 by coating, wherein silver (Ag) is contained in an amount of 0.001 to 0.1 mass% based on 1 mass% of the alloy layer 120, and the cable transmits power of 400 kWh or more.

In addition, the two-dimensional material layer 130 may be selected from the group consisting of graphene, MXene, stanene, boron nitride, niobium diselenide, disulfide, tantalum (IV) sulfide, and magnesium diboride.

In addition, the two-dimensional material layer 130 may preferably include graphene.

In addition, graphene is one in which a plurality of carbon atoms are covalently linked together to form a polycyclic aromatic molecule. The carbon atoms covalently linked together form a 6-membered ring as a basic repeating unit, but graphene may also further include a 5-membered ring and/or a 7-membered ring. Accordingly, graphene is viewed as a single layer of carbon atoms covalently bonded together (usually $sp^2$ bonds). Graphene may have various structures, and such structures may vary depending on the content of a 5-membered ring and/or 7-membered ring that may be contained in the graphene. Graphene may be composed of a single layer, but a plurality of layers of graphene may be stacked together. Typically, the side end portions of graphene may be saturated with hydrogen atoms.

In addition, graphene may be synthesized according to a chemical vapor deposition method using a catalytic metal. Examples of the chemical vapor deposition method include thermal chemical vapor deposition (T-CVD), rapid thermal chemical vapor deposition (RT-CVD), inductively coupled plasma chemical vapor deposition (ICP-CVD), and plasma enhanced chemical vapor deposition. Alternatively, atomic layer deposition (ALD) or rapid thermal anneal (RTA) may also be used.

In addition, graphene may be formed by, but not limited to, inductively coupled plasma chemical vapor deposition (ICP-CVD), low pressure chemical vapor deposition (LPCVD) or atmospheric pressure chemical vapor deposition (APCVD). In one embodiment of the present disclosure, graphene synthesis may be performed at a temperature of 1,000°C or below, but is not limited thereto.

In addition, the two-dimensional material layer 130 may have a sheet resistance value of 400 $\Omega$/sq or lower.

The alloy layer 120 according to an example of the present disclosure may basically contain copper and silver, and silver may be contained in an amount of about 0.001 to 0.1 wt%. If silver is contained in an amount of less than 0.001 wt%, it may difficult to produce high-quality graphene because large copper grains cannot be provided, and if silver is contained in an amount of more than 0.1 wt%, it may be difficult to form copper grains advantageous for graphene synthesis, which may be disadvantageous for graphene formation.

In addition, the two-dimensional material layer 130 may preferably be MXene. As one of the two-dimensional materials having a structure similar to graphene, the MAX phase (where M is a transition metal, A is a group 13 or 14 element, and X is carbon and/or nitrogen) is known. This MAX phase is also known to have excellent physical properties such as electrical conductivity, oxidation resistance, and machinability. MXene may have a two-dimensional structure having properties completely different from the three-dimensional MAX phase, and may be obtained by selectively removing the aluminum layer (corresponding to A) from the MAX phase titanium-aluminum-carbide using a strong acid such as hydrofluoric acid.

In addition, when the MAX phase is allowed to react with an etchant containing a strong acid and a reducing agent, it is possible to oxidize the MAX phase to MXene, and at the same time, it is possible to prevent the MAX phase from being completely oxidized to an oxide, by controlling the oxidation step.

MXene produced in this way may have a more uniform and clearly distinguished layered structure, and may also have a zeta potential of about -25 mV or more, or about -25 to -45 mV, or about -28 to -40 mV, or about -30 to -37 mV, and thus may have high dispersibility in water or other organic solvents.

In addition, MXene may have a high initial electrical conductivity due to the bonding between the transition metal and carbon constituting the same, and also have excellent oxidation stability, so that the electrical conductivity thereof is stably maintained even in a high-temperature and high-humidity environment.

In addition, the MAX phase may have M defined as a transition metal, A defined as a group 13 or 14 element, and X defined as carbon and/or nitrogen, and specific examples of this MAX phase include $Ti_2CdC$, $Sc_2InC$, $Ti_2AlC$, $Ti_2GaC$, $Ti_2InC$, $Ti_2TlC$, $V_2AlC$, $V_2GaC$, $Cr_2GaC$, $Ti_2AlN$, $Ti_2GaN$, $Ti_2InN$, $V_2GaN$, $Cr_2GaN$, $Ti_2GeC$, $Ti_2SnC$, $Ti_2PbC$, $V_2GeC$, $Cr_2AlC$, $Cr_2GeC$, $V_2PC$, $V_2AsC$, $Ti_2SC$, $Zr_2InC$, $Zr_2TlC$, $Nb_2AlC$, $Nb_2GaC$, $Nb_2InC$, $Mo_2GaC$, $Zr_2InN$, $Zr_2TlN$, $Zr_2SnC$, $Zr_2PbC$, $Nb_2SnC$, $Nb_2PC$, $Nb_2AsC$, $Zr_2SC$, $Nb_2SC$, $Hf_2InC$, $Hf_2TlC$, $Ta_2AlC$, $Ta_2GaC$, $Hf_2SnC$, $Hf_2PbC$, $Hf_2SnN$, $Hf_2SC$, $Ti3AlC_2$, $V_3AlC_2$, $Ti_3SiC_2$, $Ti_3GeC_2$, $Ti_3SnC_2$, $Ta_3AlC_2$, $Ti_4AlN_3$, $V_4AlC_3$, $Ti_4GaC_3$, $Ti_4SiC_3$, $Ti_4GeC_3$, $Nb_4AlC_3$, and $Ta_4AlC_3$.

In addition, the reducing agent may include at least one compound selected from the group consisting of diborane, sodium borohydride ($NaBH_4$), hydrazine, hydrogen iodide (HI), potassium iodide (KI), sodium iodide (NaI), oxalic acid, formic acid, ascorbic acid, and phosphorous acid. As described above, this reducing agent can prevent the MAX phase from being additionally oxidized to an oxide in the process of oxidizing the MAX phase to MXene.

In addition, the etchant may contain the reducing agent in an amount of 1 to 30 mol%, or 5 to 20 mol%, based on the strong acid. If the content of the reducing agent in the etchant is excessively lower than the content of the strong acid, MXene may be excessively oxidized, and thus the production of an oxide with low electrical conductivity may increase. On the other hand, if the content of the reducing agent in the etchant is excessively higher than the content of the strong acid, the MAX phase is not oxidized to MXene with excellent dispersibility, and thus it may not be possible to prepare a dispersion with good processability, or it may not be possible to produce a uniform coating layer.

Meanwhile, the type of strong acid is not particularly limited, but may include, for example, hydrogen fluoride and/or hydrogen chloride. In addition, the concentration of the strong acid is not particularly limited, but may be, for example, 1 to 50 wt%.

Also, a film produced from a dispersion of MXene may have an electrical conductivity of $5.78 * 10^4$ or higher, or $1.0 * 10^5$ S/m or higher.

In addition, the two-dimensional material layer 130 may be superconducting or near-superconducting.

The two-dimensional material layer 130 according to an example of the present disclosure may be configured to act as a superconductor in a specific temperature range.

For example, graphene may be made superconducting or near-superconducting by coating with a lithium layer or by doping with calcium atoms. The term "near-superconductivity" means that the two-dimensional material layer 130 exhibits very low but finite electrical resistance. By using the superconductivity or near-superconductivity of the two-dimensional material layer 130, the size of the metal wire may be reduced or the size of the stranded wire may be reduced, and the metal wire may be even completely omitted, resulting in significant reduction in the physical size and mass per unit length of the high-power electric vehicle charging cable.

In addition, the wire for a high-power electric vehicle charging cable may satisfy the following equation A:

[Equation A]

$$10 \leq H1/H2 \leq 1,000, \text{ wherein H1 is the radius of the first}$$

wherein H1 is the radius of the first wire 110, and H2 is the thickness of the alloy layer 120.

In addition, the thickness of the alloy layer 120 may be 5 to 75 $\mu$m.

In addition, the first wire 110 may include at least one selected from the group consisting of nickel (Ni), cobalt (Co), iron (Fe), platinum (Pt), gold (Au), aluminum (Al), chromium (Cr), copper (Cu), magnesium (Mg), manganese (Mn), molybdenum (Mo), rhodium (Rh), silicon (Si), tantalum (Ta), titanium (Ti), and tungsten (W).

In addition, the first wire 110 may include copper (Cu), the copper grains of the first wire 110 may be different from those of the alloy layer 120, and the copper grains of the alloy layer 120 may be larger than the copper grains of the first wire 110.

In addition, the size of the copper grains of the alloy layer 120 becomes larger than that of general copper through recrystallization by rolling.

According to an example of the present disclosure, as the alloy layer 120 containing silver added to copper is used, copper grains larger than the copper grains of the first wire 110 may be formed, and such copper grains may advantageously act to produce graphene having uniform quality.

In addition, the radius of the wire may be 0.1 to 50 mm.

In addition, the radius of the wire may preferably be 1 to 5 mm.

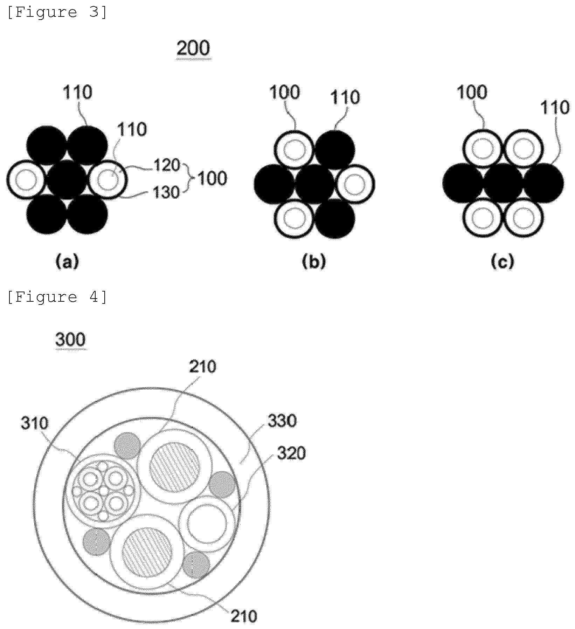

FIG. 3 is a view illustrating a stranded wire 200 for a high-power electric vehicle charging cable according to an example of the present disclosure.

Specifically, FIG. 3a shows a stranded wire in which the wire 100 for a high-power electric vehicle charging cable is two in number and a second wire is five in number; FIG. 3b shows a stranded wire in which the wire 100 for a high-power electric vehicle charging cable is three in number and the second wire is four in number, and FIG. 3c shows a stranded wire in which the wire 100 for a high-power electric vehicle charging cable is four in number and the second wire is three in number.

The stranded wire 200 for a high-power electric vehicle charging cable according to an example of the present disclosure may include: at least one wire 100 for a high-power electric vehicle charging cable according to an example of the present disclosure; and at least one second wire, wherein the total volume of the wire 100 is 10% or more based on the total volume of the stranded wire 200.

In addition, two or more wire layers may be formed by a plurality of wires disposed around a core wire disposed in the center among the wires in the cross-section of the stranded wire 200 for a high-power electric vehicle charging cable. That is, a layer formed by wires disposed around the core wire while being in direct contact with the core wire may be referred to as a first layer, and a layer formed by wires disposed around the first layer while being in direct contact with the wires of the first layer may be referred to as a second layer, and such a wire layer may be provided in plural, for example, the number of wire layers are 3, 4, 5, etc.

In addition, the number of wires included in each of the wire layers may vary depending on the diameter of the wire. For example, the number of wires included in a layer n may be na, where a represents the number of wires included in the first layer. That is, when the number of wires in the first layer is 6, the number of wires in the second layer may be 12, the number of wires in the third layer may be 18, the number of wires in the fourth layer may be 24, and the number of wires in the fifth layer may be 30.

In addition, the total volume of the wire 100 for a high-power electric vehicle charging cable may be 10% or more, preferably 10 to 90%, most preferably 10 to 50%, based on the total volume of the stranded wire 200 for a high-power electric vehicle charging cable. The total volume within the above-described numerical range may be a maximum value that satisfies electrical properties such as volume resistance depending on the nominal cross-sectional area of wires required for the cable standard, that is, the total cross-sectional area of the wires constituting the stranded wire.

In addition, if the total volume of the wire 100 for a high-power electric vehicle charging cable is less than 10%, heating, lightweight and electrical properties of a conductor required for the cable standard, etc. may be insufficient to transmit high power, whereas if the total volume thereof exceeds 90%, the effect of reducing the production cost may be insignificant.

FIG. 4 is a view illustrating a high-power electric vehicle charging cable 300 according to an example of the present disclosure.

The high-power electric vehicle charging cable 300 according to an example of the present disclosure may include: a pair of power units 210 including the wire 100 for a high-power electric vehicle charging cable or the stranded wire 200 for a high-power electric vehicle charging cable; at least one communication unit 310; a grounding unit 320; and an external unit 330 configured to surround the power units 210, the communication unit 310, and the grounding unit 320.

In addition, each communication unit 310 and the grounding unit 320 may be each covered with a coating layer, and the cable 300 may include an inclusion for maintaining the original shape of the cable and a central tension line for reinforcing the tensile force thereof.

**Claims**

1. A wire (100) for a high-power electric vehicle charging cable comprising:

   a first wire (110) formed of a metal;
   an alloy layer (120) containing copper (Cu) and silver (Ag); and
   a two-dimensional material layer (130) formed on the alloy layer by coating,
   wherein the silver (Ag) is contained in an amount of 0.001 to 0.1 mass% based on 1 mass% of the alloy layer, and the cable transmits power of 400 kWh or more.

2. The wire according to claim 1, wherein the two-dimensional material layer is selected from the group consisting of graphene, MXene, stanene, boron nitride, niobium diselenide, disulfide, tantalum (IV) sulfide, and magnesium diboride.

3. The wire according to claim 2, wherein the two-dimensional material layer has a sheet resistance value of 400 $\Omega$/sq or lower.

4. The wire according to claim 2, wherein the two-dimensional material layer is superconducting or near-superconducting.

5. The wire according to any one of preceding claims, which satisfies the following equation A:

[Equation A]

$10 \leq H1/H2 \leq 1,000$, wherein H1 is the radius of the first

wherein H1 is the radius of the first wire, and H2 is the thickness of the alloy layer.

6. The wire according to claim 5, wherein

the first wire comprises copper (Cu),
copper grains of the first wire are different from those of the alloy layer, and
the copper grains of the alloy layer are larger than the copper grains of the first wire.

7. The wire according to claim 6, which has a radius of 0.1 to 50 mm.

8. A stranded wire (200) for a high-power electric vehicle charging cable (300) comprising:

at least one wire (100) for a high-power electric vehicle charging cable (300) according to any one of claims 1 to 7; and
at least one second wire formed of a metal,
wherein a total volume of the wire for a high-power electric vehicle charging cable is 10% or more based on a total volume of the stranded wire.

9. A high-power electric vehicle charging cable (300) comprising:

a pair of power units (210) comprising either the wire for a high-power electric vehicle charging cable according to any one of claims 1 to 7 or the stranded wire for a high-power electric vehicle charging cable according to claim 8;
at least one communication unit (310);
a grounding unit (320); and
an external jacket (330) configured to surround the power units (210), the communication unit (310) and the grounding unit (320).

[Figure 1]

100

130

120

110

[Figure 2]

120

110

H2

H1

[Figure 3]

200

110

110

120
130 } 100

(a)

100 110

(b)

100 110

(c)

[Figure 4]

300

310 210 330

320

210

Europäisches
Patentamt

European
Patent Office

Office européen
des brevets

# EUROPEAN SEARCH REPORT

Application Number

EP 21 20 7927

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/135357 A1 (WON DONG KWAN [KR] ET AL) 30 April 2020 (2020-04-30)<br>* figure 4 *<br>* paragraphs [0117], [0124], [0020], [0026], [0078] *<br>----- | 1-9 | INV.<br>H01B1/02<br>H01B9/00<br>B82Y30/00<br>H01B1/04 |

TECHNICAL FIELDS
SEARCHED      (IPC)

H01B
B82Y

The present search report has been drawn up for all claims

| Place of search | Date of completion of the search | Examiner |
|---|---|---|
| The Hague | 22 April 2022 | Poole, Robert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 20 7927

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2022

| Patent document cited in search report | | Publication date | Patent family member(s) | | Publication date |
|---|---|---|---|---|---|
| US 2020135357 | A1 | 30-04-2020 | CN | 109074892 A | 21-12-2018 |
| | | | KR | 20170132450 A | 04-12-2017 |
| | | | US | 2018190406 A1 | 05-07-2018 |
| | | | US | 2020135357 A1 | 30-04-2020 |
| | | | WO | 2017204408 A1 | 30-11-2017 |

EPO FORM P0459

For more details about this annex : see Official Journal of the European Patent Office, No. 12/82